# EUROPÄISCHE PATENTSCHRIFT

(11) **EP 2 251 574 B1**
(45) Veröffentlichungstag und Bekanntmachung des Hinweises auf die Patenterteilung: **21.06.2017**
(21) Anmeldenummer: 09011967.8
(22) Anmeldetag: 19.09.2009
(51) Int. Cl.: F16K 1/44, F16K 1/52, G05D 7/01

(54) **Durchflussregelventil für Heizungs- und Kühlanlagen**
Flow rate regulating valve for heating and cooling assemblies
Soupape de réglage du débit pour installations de chauffage et frigorifiques

(30) Priorität: 06.03.2009 DE 102009011506
(43) Veröffentlichungstag der Anmeldung: 17.11.2010
(73) Patentinhaber: Oventrop GmbH & Co. KG, 59939 Olsberg (DE)
(72) Erfinder: Löffler, Gerhard, 59939 Olsberg (DE); Jürgens, Egbert, 34431 Marsberg (DE)
(74) Vertreter: Köchling, Conrad-Joachim

(56) Entgegenhaltungen:
- DE-C1- 10 114 995
- DE-C2- 4 416 154
- US-A- 5 642 752

## Beschreibung

Die Erfindung betrifft ein Durchflussregelventil für Heizungs- und Kühlanlagen mit einem Ventilgehäuse, mit Zulauf und Ablauf sowie einem Ventilsitz, wobei eine vom Ventilsitz und einem ersten Verschlussstück gebildete erste Drosselstelle mit einer zweiten nachgeschalteten einstellbaren Drosselstelle in Reihe liegt, die durch ein druckdifferenzgesteuertes zweites Ventilverschlussstück, das mit einem weiteren oder dem gleichen Ventilsitz korrespondiert, gebildet ist, wozu in einem mit dem Ventilgehäuse verbundenen Gehäuseteil eine bewegliche Trennwand vorgesehen ist, die das Gehäuseteil in zwei Druckräume unterteilt, die mit zu den Druckbezugsbereichen vor beziehungsweise hinter der ersten Drosselstelle führenden Kanälen verbunden sind, wobei die Trennwand mit dem zweiten Ventilverschlussstück verbunden oder bewegungsgekoppelt ist, und ein erster Druckraum, der auf der dem Ventilsitz abgewandten Seite der Trennwand gebildet ist, mit dem Druckbezugsbereich vor dem Ventilsitz verbunden ist und ein zweiter Druckraum, der auf der dem Ventilsitz zugewandten Seite der Trennwand gebildet ist, mit dem Druckbezugsbereich zwischen erster und zweiter Drosselstelle verbunden ist, wobei ferner das erste Verschlussstück mit einer Ventilspindel verbunden ist, auf der das zweite Verschlussstück axial verschieblich ist, die die bewegliche Trennwand abgedichtet durchgreift und abgedichtet aus dem Gehäuseteil austritt.

Bei solchen Durchflussregelventilen stellt sich ein Volumenstrom durch eine erste Drosselstelle, die durch die Stellung eines ersten Verschlussstückes zu einem Ventilsitz gebildet ist, ein, wobei der Volumenstrom eine zweite, nachgeschaltete Drosselstelle passiert, die durch ein druckdifferenzgesteuertes zweites Ventilverschlussstück, das ebenfalls mit einem oder dem gleichen Ventilsitz korrespondiert, gebildet ist. Die Druckdifferenz ist hierbei aus den vor und nach der ersten Drosselstelle wirkenden Drücken gegeben.

Diese Druckdifferenz dient als Regelgröße und wirkt auf eine Membranvorrichtung, die mit dem zweiten Verschlussstück eine Einheit bildet. Diese Membraneinheit ist beweglich angeordnet, so dass das zweite Ventilverschlussstück die zweite Drosselstelle derart verändert, dass die Druckdifferenz über der ersten Drosselstelle konstant bleibt und somit auch der Volumenstrom.

Damit diese Bewegung unabhängig von Differenzdruckschwankungen über dem zweiten Verschlussstück bleibt, wirkt der nach der ersten Drosselstelle anstehende Druck sowohl auf die Anströmseite als auch auf die zur Membraneinheit gerichtete Rückseite des zweiten Verschlussstückes, wobei beide Seiten durch ein Dichtelement voneinander getrennt sind und der Druck durch Kanäle der Membraneinheit entsprechend auf die Rückseite geleitet wird. Ändern sich in der Heizungs- oder Kühlanlage die Betriebsbedingungen, so kann es erforderlich sein, den Volumenstrom anzupassen, wozu dann die erste Drosselstelle und damit die Stellung des ersten Verschlussstückes zu verändern ist. Dieses erfolgt beispielsweise manuell oder durch motorbetriebene Einstellvorrichtungen, die mit dem ersten Verschlussstück verbunden sind.

Solche Durchflussregelventile sind beispielsweise aus der DE 44 16 154 C2 bekannt.

Zur Bewältigung großer Volumenströme mit Durchflussregelventilen nehmen die Stellkräfte zur Veränderung der Stellung des ersten Verschlussstückes zu, so dass die manuelle Betätigung schwieriger oder gar nicht mehr möglich ist. Bei motorbetriebenen Einstellvorrichtungen sind entsprechend sehr leistungsstarke Einstellvorrichtungen erforderlich.

Aus der US 5 642 752 A ist ein Ventil bekannt, welches eine Druckentlastungseinrichtung aufweist.

Ferner ist aus der DE 101 14 995 C1 ebenfalls ein Regulierventil mit einer Druckentlastung.

Ausgehend von diesem Stand der Technik liegt der Erfindung die Aufgabe zugrunde, bei solchen Durchflussregelventilen die Stellkräfte des ersten Ventilverschlussstückes niedrig zu halten, so dass dieses in einfacher Weise manuell oder mit nicht besonders leistungsstarken Einstellvorrichtungen verstellt werden kann.

Zur Lösung dieser Aufgabe schlägt die Erfindung vor, dass im Bereich zwischen der beweglichen Trennwand und dem Spindelaustritt aus dem Gehäuseteil eine Druckentlastungseinrichtung angeordnet und mit der Ventilspindel gekoppelt ist, mittels derer eine Druckdifferenz auf die Ventilspindel übertragbar ist, die der Druckdifferenz am ersten Verschlussstück entgegengerichtet ist und diese ausgleicht, und dass die Druckentlastungseinrichtung aus einem von der Ventilspindel abgedichtet durchgriffenen, gehäusefest angeordneten Drucktopf besteht, dessen Boden der beweglichen Trennwand zugewandt ist und dessen Wandung entgegengerichtet abragt, ferner aus einem tellerartigen Kolben, der von der Ventilspindel durchgriffen und fest mit dieser verbunden ist und der im Drucktopf axial beweglich abgedichtet geführt ist, wobei zwischen Kolben und Boden des Drucktopfes ein dritter Druckraum und zwischen Kolben und dem Spindelaustritt des Gehäuseteils ein vierter Druckraum gebildet ist, und wobei der dritte Druckraum mit dem Druck nach der ersten Drosselstelle und der vierte Druckraum mit dem Druck vor der ersten Drosselstelle beaufschlagt ist.

Ganz allgemein schlägt die Erfindung damit einen Druckausgleich beziehungsweise eine Druckentlastung vor, so dass beim Betrieb des Durchflussregelventils die Druckkräfte, die auf das erste Verschlussstück einwirken, ausgeglichen werden, so dass eine einfache und kraftarme Einstellung des ersten Verschlussstückes ermöglicht ist.

Gemäß dieser Ausbildung ist in einem Gehäuseteil, welches jenseits der Trennwand liegt und welches von der Ventilspindel durchgriffen ist, ein Drucktopf und ein in diesem beweglicher tellerartiger Kolben vorgesehen. Durch den mit der Ventilspindel verbundenen Kolben werden im Gehäuse beziehungsweise im Drucktopf dritte und vierte Druckräume gebildet, die mit dem Druck nach der ersten Drosselstelle und mit dem Druck vor der ersten Drosselstelle beaufschlagt sind, so dass bezüglich der Ventilspindel ein Druckausgleich geschaffen wird, wodurch das Verschlussstück unabhängig von dem auftretenden Hauptvolumenstrom leicht verstellbar bleibt, indem auf das Spindelende manuell oder mittels eines geeigneten Antriebes eingewirkt wird.

Bevorzugt ist dabei vorgesehen, dass das zweite Ventilverschlussstück eine rohrartige Hülse ist, die von der Ventilspindel durchgriffen ist, wobei ein auf der Ventilspindel geführter Kragen des zweiten Ventilverschlussstücks, der nahe zum ersten Verschlussstück angeordnet ist, Strömungsdurchlasskanäle bildet, die den Druckbezugsbereich zwischen erster und zweiter Drosselstelle mit einem zwischen der Ventilspindel und der Hülse gebildeten ersten Ringspalt verbindet, wobei die Hülse mit dem Gehäuse einen zweiten Ringspalt bildet, der mit dem zweiten Druckraum in Verbindung steht und über Wandungsdurchbrüche der Hülse mit dem ersten Ringspalt in Verbindung steht, und dass die Ventilspindel innenliegend einen Kanal aufweist, der über mindestens einen ersten Wandungsdurchbruch im Spindelmantel mit dem ersten Ringspalt in Verbindung steht und der über mindestens einen zweiten Wandungsdurchbruch mit dem zwischen dem Kolben und dem Boden des Druckkopfes gebildeten dritten Druckraum verbunden ist.

Durch diese Ausbildung wird eine sehr kompakte und funktionelle Lösung zur Verfügung gestellt, um eine Druckentlastung der Voreinstellung zu erreichen.

Zudem kann dabei vorgesehen sein, dass der vierte Druckraum, der zwischen Kolben und Spindelaustritt gebildet ist, über einen zwischen dem Mantel des Drucktopfes und der diesen umgebenden Gehäusewandung ausgebildeten Kanal mit dem ersten Druckraum in Verbindung steht.

Auch hierdurch wird die kompakte Bauform der Gesamtarmatur gefördert.

Zudem kann vorgesehen sein, dass der erste Druckraum über eine separate Verbindungsleitung mit dem Zulauf des Gehäuses verbunden ist.

Die Erfindung stellt ein Durchflussregelventil zur Verfügung, bei welchem die Druckdifferenz über den mit dem Ventilstößel verbundenen tellerartigen Kolben eine Kraft auf der Ventilspindel erzeugt, die der Kraft, die aus der Druckdifferenz über dem ersten Verschlussstück resultiert, entgegenwirkt, so dass die Stellkräfte für das Verschlussstück unabhängig von dieser Druckdifferenz sind. Die von einer manuellen Bedienung oder von einem Motorantrieb betätigte Ventilspindel braucht dann nur noch die durch Führungen und Dichtelementen erzeugte Reibung zu überwinden. Außerdem ermöglicht eine solche Einheit zur Druckentlastung des ersten Ventilverschlussstückes die Regelfunktion des Durchflussregelventils nicht durch zusätzliche Reibkräfte mit Dichtelement in der Membraneinheit zu beeinträchtigen.

Zudem kann auch vorgesehen sein, dass die Axialbewegung der Ventilspindel durch Anschläge begrenzt wird und mindestens einer der Anschläge axial verstellbar ist.
Vorteilhaft ist hierbei, dass der verstellbare Anschlag als Hubbegrenzung am dem Verschlussstück gegenüberliegenden Ende des Ventilstößels vorgesehen ist, die unabhängig von der Antriebsart der Ventilspindel auch über eine Handbetätigung und/oder mit einer motorbetriebenen Einstellvorrichtung veränderbar ist.

Um die mit der Stellung der Hubbegrenzung korrespondierenden Durchflusswerte ablesen zu können, weist die Hubbegrenzung eine Skalierung auf.

Bezüglich der motorisierten Betätigung der Ventilspindel einerseits sowie der motorisierten Hubbegrenzung andererseits können Antriebe Anwendung finden, die als Dreh- oder Hubantrieb ausgeführt sind.

Ein Ausführungsbeispiel der Erfindung ist in der Zeichnung dargestellt und im Folgenden näher beschrieben. Es zeigt:

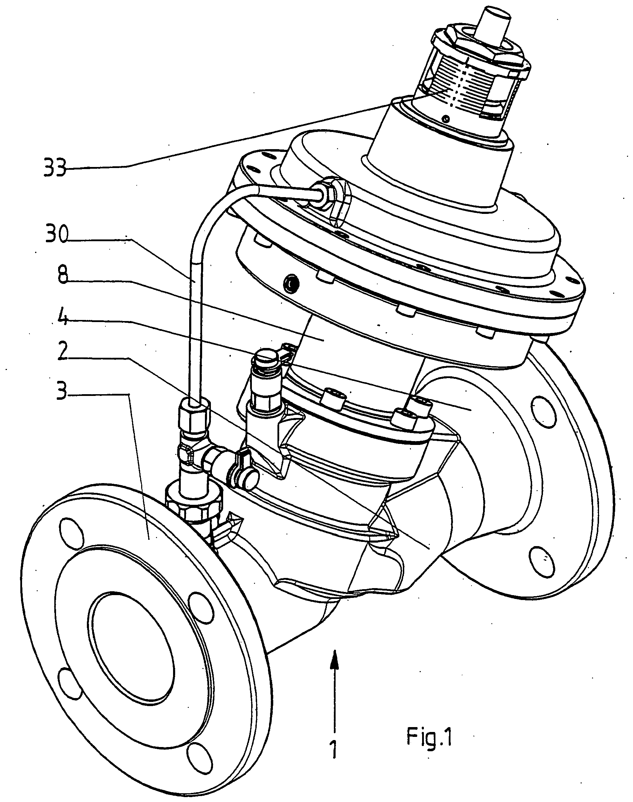

- Figur 1: ein Durchflussregelventil in Ansicht;

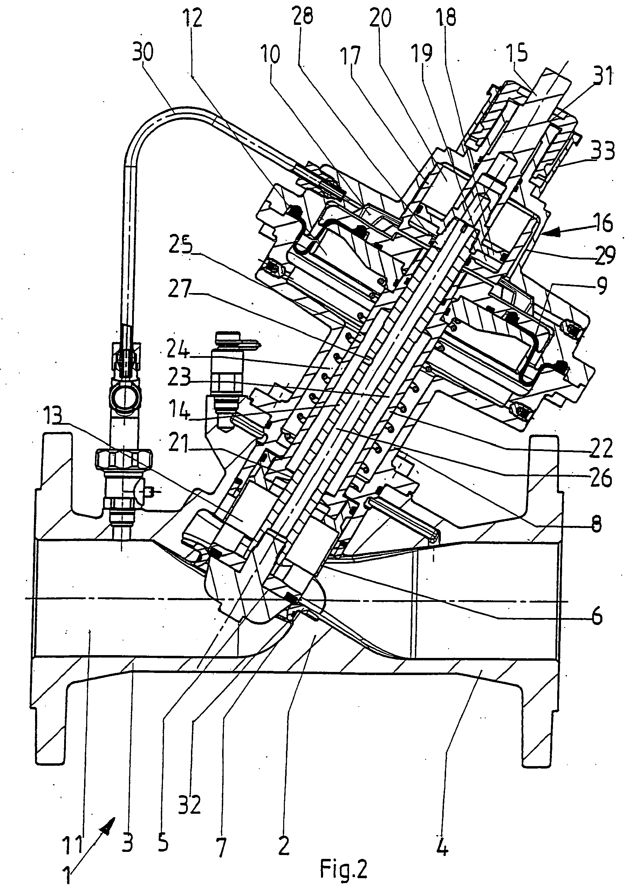

- Figur 2: desgleichen im Mittellängsschnitt gesehen.

In der Zeichnung ist ein Durchflussregelventil 1 für Heizungs- oder Kühlanlagen gezeigt. Es weist ein Ventilgehäuse 2 mit einem Zulaufstutzen 3 und einem Ablaufstutzen 4 auf sowie einen Ventilsitz 7. Am Ventilgehäuse 2 ist eine anschließend noch näher beschriebene Ventileinrichtung angeordnet. Diese bildet eine vom Ventilsitz 7 und einem ersten Verschlussstück 5 gebildete erste Drosselstelle, die mit einer zweiten nachgeschalteten, einstellbaren Drosselstelle in Reihe liegt, die durch ein druckdifferenzgesteuertes zweites Ventilverschlussstück 6 gebildet ist, dass mit einem weiteren Ventilsitz oder im Ausführungsbeispiel mit dem gleichen Ventilsitz 7 korrespondiert. Zur Differenzdrucksteuerung ist in einem mit dem Ventilgehäuse 2 verbundenen Gehäuseteil 8 eine bewegliche Trennwand 9 vorgesehen, die das Gehäuseteil 8 in zwei Druckräume unterteilt, die mit zu den Druckbezugsbereichen vor beziehungsweise hinter der ersten Drosselstelle führenden Kanälen verbunden sind. Die Trennwand 9 ist mit dem zweiten Ventilverschlussstück 8 verbunden oder bewegungsgekoppelt und ein erster Druckraum 10 ist auf der dem ersten Ventilsitz 7 abgewandten Seite der Trennwand 9 gebildet, der mit dem Druckbezugsbereich 11 vor dem ersten Ventilsitz 7 verbunden ist. Die Trennwand 9 begrenzt einen zweiten Druckraum 12, der auf der dem ersten Ventilsitz 7 zugewandten Seite der Trennwand 9 gebildet ist und der mit dem Druckbezugsbereich 13 zwischen erster Drosselstelle und zweiter Drosselstelle (erstes Verschlussstück 5 und zweites Verschlussstück 6) verbunden ist. Das erste Verschlussstück 5 ist mit einer Ventilspindel 14 fest verbunden, auf der das zweite Verschlussstück 6 axial verschieblich angeordnet ist, wobei die Ventilspindel 14 die bewegliche Trennwand 9 abgedichtet durchgreift und abgedichtet (nach oben) aus dem Gehäuseteil 8 austritt. Das Austrittsende 15 bildet eine Handhabe für manuelle Betätigung oder für motorischen Antrieb.

Im Bereich zwischen der beweglichen Trennwand und dem Spindelaustritt aus dem Gehäuseteil 8 ist eine Druckentlastungseinrichtung 16 angeordnet und mit der Ventilspindel 14 gekoppelt, mittels derer eine Druckdifferenz auf die Ventilspindel 14 übertragbar ist, die der Druckdifferenz am ersten Verschlussstück 5 entgegengerichtet ist und diese ausgleicht.

Die Druckentlastungseinrichtung 16 besteht aus einem von der Ventilspindel 14 abgedichtet durchgriffenen, gehäusefest angeordneten Drucktopf 17, dessen Boden der beweglichen Trennwand 9 zugewandt ist und dessen Wandung entgegengerichtet zum Spindelaustritt hin abragt, sowie aus einem tellerartigen Kolben 18, der von der Ventilspindel 14 durchgriffen und fest mit dieser verbunden ist. Der Kolben 18 ist im Drucktopf 17 axial beweglich abgedichtet geführt. Zwischen dem Kolben 18 und dem Boden des Drucktopfes 17 ist ein dritter Druckraum 19 und zwischen dem Kolben 18 und dem Spindelaustritt des Gehäuseteils 8 ein vierter Druckraum 20 gebildet. Der dritte Druckraum 19 ist mit dem Druck nach der ersten Drosselstelle (Verschlussstück 5) und der vierte Druckraum 20 mit dem Druck vor der ersten Drosselstelle beaufschlagt.

Das zweite Ventilverschlussstück 6 ist eine rohrartige Hülse, die von der Ventilspindel 14 durchgriffen ist, wobei ein auf der Ventilspindel 14 geführter Kragen des zweiten Ventilverschlussstückes 6, der nahe des ersten Verschlussstückes 7 angeordnet ist, Strömungsdurchlasskanäle 21 bildet, die den Druckbezugsbereich zwischen erster und zweiter Drosselstelle (Verschlussstück 5 und 6) mit einem zwischen der Ventilspindel 14 und der Hülse 22 gebildeten ersten Ringspalt 23 verbindet, wobei die Hülse 22 mit dem Gehäuse 8 einen zweiten Ringspalt 24 bildet, der mit dem zweiten Druckraum 12 in Verbindung steht und über Wandungsdurchbrüche 25 der Hülse 22 mit dem ersten Ringspalt 23 in Verbindung steht.

Die Ventilspindel 14 weist innenliegend einen Kanal 26 auf, der über mindestens einen ersten Wandungsdurchbruch 27 im Mantel der Spindel 14 mit dem ersten Ringspalt 23 in Verbindung steht und der über mindestens einen zweiten Wandungsdurchbruch 28 mit dem zwischen dem Kolben 18 und dem Boden des Drucktopfes 17 gebildeten dritten Druckraum 19 verbunden ist.

Der vierte Druckraum 20, der zwischen Kolben 18 und Spindelaustritt gebildet ist, steht über einen zwischen dem Mantel des Drucktopfes 17 und der diesen umgehenden Gehäusewandung ausgebildeten Kanal 29 mit dem ersten Druckraum 10 in Verbindung. Der erste Druckraum 10 ist über eine separate Verbindungsleitung 30 mit dem Zulaufstutzen 3 des Gehäuses 2 verbunden.

Das Durchflussregelventil 1 ermöglicht somit eine Voreinstellung sowie einen Ausgleich von Differenzdruckschwankungen und zusätzlich eine druckentlastete Voreinstellung.

Die Erfindung ist nicht auf das Ausführungsbeispiel beschränkt, sondern im Rahmen der Offenbarung vielfach variabel.

## Patentansprüche

1. Durchflussregelventil (1) für Heizungs- und Kühlanlagen mit einem Ventilgehäuse (2), mit Zulauf (3) und Ablauf (4) sowie einem Ventilsitz (7), wobei eine vom Ventilsitz (7) und einem ersten Verschlussstück (5) gebildete erste Drosselstelle mit einer zweiten nachgeschalteten einstellbaren Drosselstelle in Reihe liegt, die durch ein druckdifferenzgesteuertes zweites Ventilverschlussstück (6), das mit einem weiteren oder dem gleichen Ventilsitz (7) korrespondiert, gebildet ist, wozu in einem mit dem Ventilgehäuse (2) verbundenen Gehäuseteil (8) eine bewegliche Trennwand (9) vorgesehen ist, die das Gehäuseteil (8) in zwei Druckräume unterteilt, die mit zu den Druckbezugsbereichen vor beziehungsweise hinter der ersten Drosselstelle führenden Kanälen verbunden sind, wobei die Trennwand (9) mit dem zweiten Ventilverschlussstück (6) verbunden oder bewegungsgekoppelt ist, und ein erster Druckraum (10), der auf der dem Ventilsitz (7) abgewandten Seite der Trennwand (9) gebildet ist, mit dem Druckbezugsbereich (11) vor dem Ventilsitz (7) verbunden ist und ein zweiter Druckraum (12), der auf der dem Ventilsitz (7) zugewandten Seite der Trennwand (9) gebildet ist, mit dem Druckbezugsbereich (13) zwischen erster und zweiter Drosselstelle verbunden ist, wobei ferner das erste Verschlussstück (5) mit einer Ventilspindel (14) verbunden ist, auf der das zweite Verschlussstück (6) axial verschieblich ist, die die bewegliche Trennwand (9) abgedichtet durchgreift und abgedichtet aus dem Gehäuseteil (8) austritt, **dadurch gekennzeichnet, dass** im Bereich zwischen der beweglichen Trennwand (9) und dem Spindelaustritt aus dem Gehäuseteil (8) eine Druckentlastungseinrichtung (16) angeordnet und mit der Ventilspindel (14) gekoppelt ist, mittels derer durch eine Druckdifferenz eine Kraft auf die Ventilspindel (14) übertragbar ist, die der Kraft aus der Druckdifferenz am ersten Verschlussstück (5) entgegengerichtet ist und diese ausgleicht, und dass die Druckentlastungseinrichtung (16) aus einem von der Ventilspindel (14) abgedichtet durchgriffenen, gehäusefest angeordneten Drucktopf (17) besteht, dessen Boden der beweglichen Trennwand (9) zugewandt ist und dessen Wandung entgegengerichtet abragt, ferner aus einem tellerartigen Kolben (18), der von der Ventilspindel (14) durchgriffen und fest mit dieser verbunden ist und der im Drucktopf (17) axial beweglich abgedichtet geführt ist, wobei zwischen Kolben (18) und Boden des Drucktopfes (17) ein dritter Druckraum (19) und zwischen Kolben (18) und dem Spindelaustritt des Gehäuseteils (8) ein vierter Druckraum (20) gebildet ist, und wobei der dritte Druckraum (19) mit dem Druck (13) nach der ersten Drosselstelle und der vierte Druckraum (20) mit dem Druck (11) vor der ersten Drosselstelle beaufschlagt ist.

2. Durchflussregelventil nach Anspruch 1,
**dadurch gekennzeichnet, dass** das zweite Ventilverschlussstück (6) eine rohrartige Hülse (22) ist, die von der Ventilspindel (14) durchgriffen ist, wobei ein auf der Ventilspindel (14) geführter Kragen des zweiten Ventilverschlussstücks (6), der nahe zum ersten Verschlussstück (5) angeordnet ist, Strömungsdurchlasskanäle (21) bildet, die den Druckbezugsbereich (13) zwischen erster und zweiter Drosselstelle mit einem zwischen der Ventilspindel (14) und der Hülse (22) gebildeten ersten Ringspalt (23) verbindet, wobei die Hülse (22) mit dem Gehäuse (8) einen zweiten Ringspalt (24) bildet, der mit dem zweiten Druckraum (12) in Verbindung steht und über Wandungsdurchbrüche (25) der Hülse (22) mit dem ersten Ringspalt (23) in Verbindung steht, und dass die Ventilspindel (14) innenliegend einen Kanal (26) aufweist, der über mindestens einen ersten Wandungsdurchbruch (27) im Spindelmantel mit dem ersten Ringspalt (23) in Verbindung steht und der über mindestens einen zweiten Wandungsdurchbruch (28) mit dem zwischen dem Kolben (18) und dem Boden des Druckkopfes (17) gebildeten dritten Druckraum (19) verbunden ist.

3. Durchflussregelventil nach Anspruch 1 oder Anspruch 2, **dadurch gekennzeichnet, dass** der vierte Druckraum (20) der zwischen Kolben (18) und Spindelaustritt gebildet ist, über einen zwischen dem Mantel des Drucktopfes (17) und der diesen umgebenden Gehäusewandung ausgebildeten Kanal (29) mit dem ersten Druckraum (10) in Verbindung steht.

4. Durchflussregelventil nach einem der Ansprüche 1 bis 3, **dadurch gekennzeichnet, dass** der erste Druckraum (10) über eine separate Verbindungsleitung (30) mit dem Zulauf (11) des Gehäuses (2) verbunden ist.

5. Durchflussregelventil nach einem der Ansprüche 1 bis 4, **dadurch gekennzeichnet, dass** die Axialbewegung der Ventilspindel (14) durch Anschläge (31,32) begrenzt ist und dass die Position mindestens einer der Anschläge axial verstellbar ist.

6. Durchflussregelventil nach Anspruch 5, **dadurch gekennzeichnet, dass** die axiale Position des verstellbaren Anschlages (31) mittels einer angebrachten Skala (33) bestimmt werden kann.

7. Durchflussregelventil nach Anspruch 6, **dadurch gekennzeichnet, dass** die Skala (33) mit Durchflusswerten bedruckt ist.

8. Durchflussregelventil nach einem der Ansprüche 1 bis 7, **dadurch gekennzeichnet, dass** die motorisierte Betätigung der Ventilspindel (14) einerseits sowie die motorisierte axiale Einstellung des Anschlages (31) andererseits durch Antriebe, die als Dreh- und/oder Hubantrieb ausgeführt sind, erfolgen kann.

## Claims

1. A flow rate regulating valve (1) for heating and cooling assemblies, comprising a valve housing (2) with an inlet (3) and an outlet (4) and a valve seat (7), a first restriction formed by the valve seat (7) and a first closure piece (5) being arranged in series with a second downstream adjustable restriction formed by a pressure differential-controlled second valve closure piece (6) corresponding to another or the same valve seat (7), for which purpose in a housing portion (8) connected to the valve housing (2) a movable dividing wall (9) is provided that divides the housing portion (8) into two pressure compartments connected to channels leading to the pressure reference sections upstream or downstream of the first restriction, the dividing wall (9) being connected or motionally coupled to the second valve closure piece (6), and a first pressure compartment (10) formed on the side of the dividing wall (9) remote from the valve seat (7) being connected to the pressure reference section (11) upstream of the valve seat (7) and a second pressure compartment (12) formed on the side of the dividing wall (9) facing toward the valve seat (7) being connected to the pressure reference section (13) between first and second restrictions, further the first closure piece (5) being connected to a valve spindle (14), on which the second closure piece (6) is axially displaceable and which penetrates in a sealed manner through the movable dividing wall (9) and exits in a sealed manner from the housing portion (8),
**characterized by that** in the area between the movable dividing wall (9) and the spindle exit from the housing portion (8) a pressure-relief device (16) is arranged and coupled to the valve spindle (14), by means of which by a pressure differential a force can be applied on the valve spindle (14), said force acting in a direction opposite to the force from the pressure differential at the first closure piece (5) and balancing the latter, and that the pressure-relief device (16) is composed of a housing-mounted pressure pot (17) penetrated in a sealed manner by the valve spindle (14), the bottom of said pressure pot facing toward the movable dividing wall (9) and the wall thereof protruding in an opposite direction, further of a plate-like piston (18) that is penetrated by the valve spindle (14) and is firmly connected thereto and that is axially movably guided in a sealed manner in the pressure pot (17), wherein between the piston (18) and the bottom of the pressure pot (17) a third pressure compartment (19), and between the piston (18) and the spindle exit of the housing portions (8) a fourth pressure compartment (20) is formed, and wherein on the third pressure compartment (19) is applied the pressure (13) downstream of the first restriction and on the fourth pressure compartment (20) is applied the pressure (11) upstream of the first restriction.

2. The flow rate regulating valve according to claim 1, **characterized by that** the second valve closure piece (6) is a tube-like sleeve (22) that is penetrated by the valve spindle (14), wherein a collar of the second valve closure piece (6) guided on the valve spindle (14) and arranged close to the first closure piece (5) forms flow-through channels (21) connecting the pressure reference section (13) between first and second restrictions to a first annular gap (23) formed between the valve spindle (14) and the sleeve (22), wherein the sleeve (22) with the housing (8) forms a second annular gap (24) that is in communication with the second pressure compartment (12) and, via wall apertures (25) of the sleeve (22), is in communication with the first annular gap (23), and that the valve spindle (14) includes inwardly a channel (26) that is in communication, via at least one first wall aperture (27) in the spindle sleeve, with the first annular gap (23) and that is connected, via at least one second wall aperture (28), to the third pressure compartment (19) formed between the piston (18) and the bottom of the pressure pot (17).

3. The flow rate regulating valve according to claim 1 or claim 2, **characterized by that** the fourth pressure compartment (20) formed between the piston (18) and the spindle exit is in communication, via a channel (29) formed between the sleeve of the pressure pot (17) and the housing wall surrounding the latter, with the first pressure compartment (10).

4. The flow rate regulating valve according to one of claims 1 to 3, **characterized by that** the first pressure compartment (10) is connected, via a separate connector duct (30), to the inlet (11) of the housing (2).

5. The flow rate regulating valve according to one of claims 1 to 4, **characterized by that** the axial movement of the valve spindle (14) is limited by stops (31, 32), and that the position of at least one of the stops is axially adjustable.

6. The flow rate regulating valve according to claim 5, **characterized by that** the axial position of the adjustable stop (31) can be determined by means of an attached scale (33).

7. The flow rate regulating valve according to claim 6, **characterized by that** the scale (33) is imprinted with flow values.

8. The flow rate regulating valve according to one of claims 1 to 7, **characterized by that** the motorized actuation of the valve spindle (14) on the one hand and the motorized axial adjustment of the stop (31) on the other hand may occur by drives that are configured as rotational and/or lifting drives.

## Revendications

1. Soupape de réglage du débit (1) pour installations de chauffage et frigorifiques, comprenant un corps de soupape (2) avec une entrée (3) et une sortie (4) et un siège de soupape (7), une première restriction réalisée par le siège de soupape (7) et une première pièce de fermeture (5) étant disposée en série avec une deuxième restriction en aval réglable étant réalisée par une deuxième pièce de fermeture de soupape (6) commandée par pression différentielle correspondant à un autre ou le même siège de soupape (7), pour ce but dans une partie de corps (8) liée au corps de soupape (2) une cloison de séparation (9) mobile étant prévue partageant la partie de corps (8) en deux compartiments de pression liés à des passages menant aux zones de référence de pression en amont ou en aval de la première restriction, la cloison de séparation (9) étant liée ou couplée en ses mouvements avec la deuxième pièce de fermeture de soupape (6), et un premier compartiment de pression (10) réalisé sur le côté de la cloison de séparation (9) opposé au siège de soupape (7) étant lié à la zone de référence de pression (11) en amont du siège de soupape (7) et un deuxième compartiment de pression (12) réalisé sur le côté de la cloison de séparation (9) faisant face au siège de soupape (7) étant lié à la zone de référence de pression (13) entre la première et la deuxième restriction, en outre la première pièce de fermeture (5) étant liée à une tige de soupape (14), sur laquelle la deuxième pièce de fermeture (6) peut coulisser axialement et qui traverse de façon étanche la cloison de séparation (9) mobile et sort de façon étanche de la partie de corps (8),
**caractérisée en ce qu'**au niveau entre la cloison de séparation (9) mobile et la sortie de la tige du partie de corps (8) un dispositif de dépressurisation (16) est disposé et couplé à la tige de soupape (14), au moyen duquel une force peut être appliquée par une pression différentielle à la tige de soupape (14), cette force agissant dans un sens opposé à la force à partir de la pression différentielle à la première pièce de fermeture (5) et équilibrant la dernière, et que le dispositif de dépressurisation (16) se compose d'un pot de pression (17) monté fixe dans le corps et traversé de façon étanche par la tige de soupape (14), le fond de ce pot de pression faisant face à la cloison de séparation (9) mobile et la paroi de celui-ci faisant saillie dans un sens opposé, en outre d'un piston (18) en forme de plat qui est traversé par la tige de soupape (14) et est solidaire de celle-ci et qui est guidé axialement mobile de façon étanche dans le pot de pression (17), entre le piston (18) et le fond du pot de pression (17) un troisième compartiment de pression (19), et entre le piston (18) et la sortie de la tige du partie de corps (8) un quatrième compartiment de pression (20) étant réalisé, et sur le troisième compartiment de pression (19) est appliquée la pression (13) en aval de la première restriction et sur le quatrième compartiment de pression (20) est appliquée la pression (11) en amont de la première restriction.

2. Soupape de réglage du débit selon la revendication 1, **caractérisée en ce que** la deuxième pièce de fermeture de soupape (6) est un manchon (22) de section tubulaire qui est traversé par la tige de soupape (14), une collerette de la deuxième pièce de fermeture de soupape (6) guidée sur la tige de soupape (14) et disposée proche de la première pièce de fermeture (5) formant des conduits de passage (21) du débit raccordant la zone de référence de pression (13) entre la première et la deuxième restriction à une première fente annulaire (23) réalisée entre la tige de soupape (14) et le manchon (22), le manchon (22) avec le corps (8) formant une deuxième fente annulaire (24) qui est en communication avec le deuxième compartiment de pression (12) et, par l'intermédiaire d'ouvertures de paroi (25) du manchon (22), est en communication avec la première fente annulaire (23), et que la tige de soupape (14) comporte à son intérieur un passage (26) qui est en communication, par l'intermédiaire d'au moins une première ouverture de paroi (27) dans le manchon de la tige, avec la première fente annulaire (23) et qui est lié, par l'intermédiaire d'au moins une deuxième ouverture de paroi (28), au troisième compartiment de pression (19) réalisé entre le piston (18) et le fond du pot de pression (17).

3. Soupape de réglage du débit selon la revendication 1 ou revendication 2, **caractérisée en ce que** le quatrième compartiment de pression (20) réalisé entre le piston (18) et la sortie de la tige est en communication, par l'intermédiaire d'un passage (29) réalisé entre le manchon du pot de pression (17) et la paroi du corps encerclant celui-ci, au premier compartiment de pression (10).

4. Soupape de réglage du débit selon une des revendications 1 à 3, **caractérisée en ce que** le premier compartiment de pression (10) est lié, par l'intermédiaire d'un conduit de liaison (30) séparé, à l'entrée (11) du corps (2).

5. Soupape de réglage du débit selon une des revendications 1 à 4, **caractérisée en ce que** le mouvement axial de la tige de soupape (14) est limité par des butées (31, 32) et que la position d'au moins une des butées est axialement réglable.

6. Soupape de réglage du débit selon la revendication 5, **caractérisée en ce que** la position axiale de la butée (31) réglable peut être déterminée au moyen d'une échelle (33) attachée.

7. Soupape de réglage du débit selon la revendication 6, **caractérisée en ce que** l'échelle (33) est imprimée avec des valeurs du débit.

8. Soupape de réglage du débit selon une des revendications 1 à 7, **caractérisée en ce que** l'actionnement motorisé de la tige de soupape (14) d'un côté et le réglage axial motorisé de la butée (31) de l'autre côté peuvent avoir lieu par des entraînements qui sont réalisés comme des entraînements rotatifs et/ou de levage.
